# EUROPEAN PATENT APPLICATION

(11) **EP 2 466 225 A1**
(43) Date of publication of application: **20.06.2012**
(21) Application number: 11193712.4
(22) Date of filing: 15.12.2011
(51) Int. Cl.: F24J 2/14, F24J 2/54

(54) **Solar collector and cooperative solar collector system**

(30) Priority: 15.12.2010 JP 2010279436
(71) Applicant: Hitachi Plant Technologies, Ltd., Tokyo 170-8466 (JP)
(72) Inventor: Masuda, Hiroto, Tokyo, 170-8466 (JP); Sakuma, Masayoshi, Tokyo, 170-8466 (JP); Kawane, Shinichirou, Tokyo, 170-8466 (JP); Nakamura, Kenji, Tokyo, 170-8466 (JP)
(74) Representative: Beetz & Partner

(57) **Abstract**

In order to secure stable heat collection efficiency of a solar collector and achieve a safe and less expensive support/driving mechanism of the solar collector, a solar collector 10 is provided with a tracking unit 12 that is rotatably arranged around a drive shaft 41. The tracking unit 12 includes a heat collection tube 30 that is disposed in a longitudinal direction of the tracking unit 12 and converts sunlight into heat by absorbing the sunlight, and a collector 20 that has a reflection panel 21 having a concave cross section in a lateral direction thereof for reflecting the sunlight on the heat collection tube 30 and a support member supporting the reflection panel 21 from the backside. The heat collection tube 30 is fixed to the collector 20. The support member includes a tubular main pipe 25 disposed at a lowermost portion and in the longitudinal direction of the support member and a plurality of flat support frames 22 which are fixed to the upper portion of the main pipe 25 in the lateral direction and vertically fixed to the backside of the reflection panel 21 along the concave portion.

## Description

### BACKGROUND OF THE INVENTION

### 1. FIELD OF THE INVENTION

The present invention relates to a solar collector and a cooperative solar collector system, and more particularly, to a structure of the solar collector that is used for a photovoltaic power generation system or a solar heat utilizing air conditioning system. Furthermore, the present invention relates to the solar collector that secures stable heat collection efficiency and has a safe and less expensive member structure that supports a reflection panel, and the cooperative solar collector system that has means for driving a plurality of solar collectors in cooperation.

### 2. DESCRIPTION OF RELATED ART

Because of issues of fossil fuel depletion and global warming, recently, effective utilization of clean energy such as solar energy has been promoted in the world.

As a clean energy system utilizing sunlight, there are two kinds of systems. One system converts sunlight into electric energy by a solar cell made of, for example, amorphous silicon or crystal silicon. The other system converts sunlight into thermal energy by a heat medium by collecting sunlight using a mirror.

The system that converts sunlight into thermal energy by collecting sunlight is sorted into, for example, a trough type, a parabola type and a tower type. The trough type is a system that focuses sunlight on a pipe which is set in front of a mirror by using a curved mirror having a gutter shape, heats up a heat medium (water, oil and etc.) flowing in the pipe in order to convert the sunlight into thermal energy. The parabola type is a system that focuses sunlight on, for example, a Stirling engine set in front of a mirror using the mirror having a shape similar to a parabola antenna in order to convert the sunlight into thermal energy. This system is also called as a Dish/Stirling system. The tower type is a system that arranges a plurality of plane mirrors, focuses sunlight on a heat collector set in the center of the plurality of plane mirrors in order to convert the sunlight into thermal energy.

The trough type solar collector is shown in FIG. 1 to FIG. 4 of WO 01/02780 A1 and in FIG. 1 of US Patent Publication No.2005/0139210, respectively. In German Patent Publication No.19821137, the parabola type solar collector is shown. In addition, in Japanese Patent Publication No.2010-144725, the tower type solar collector is shown.

Currently, many solar collectors are adopted for a power generation system and air-conditioning system that use thermal energy. In a solar collector used for a power generation system, a truss structure is adopted on the backside of a reflection panel as a support structure supporting the reflection panel, in many cases. On each end of the truss structure in the longitudinal direction, a rotary shaft is disposed and the rotary shaft is rotatably supported by two support rods. In addition, in a solar collector used for an air-conditioning system, a pipe and square rod are used in many cases as a member for constructing the truss structure.

As a rotation drive method of the solar collector, a direct drive method for directly driving each solar collector or a method for driving several solar collectors in cooperation may be adopted. Japanese Patent Publication No.2003-329963 describes the invention that moves reflection surfaces constituting a solar collector heliostat in cooperation, by using wires.

### [PRIOR ARTS]

### [PATENT DOCUMENT]

[Patent Document 1] WO 01/02780 A1
[Patent Document 2] US Patent Publication No.2005/0139210
[Patent Document 3] German Patent Publication No.19821137
[Patent Document 4] Japanese Patent Publication No.2010-144725
[Patent Document 5] Japanese Patent Publication No.2003-329963

### [SUMMARY OF THE INVENTION]

### [PROBLEM TO BE SOLVED]

However, in the conventional support/drive structure of the solar collector, there are remaining aspects that are not sufficiently considered in the case that the solar collector receives a wind load when a mirror is rotating for tracking the sun.

It is, therefore, an object of the present invention to provide a solar collector and a cooperative solar collector system that can secure stable collection efficiency even if they receive a wind load when a mirror is rotating for tracking the sun, and achieve a safe and less expensive support/drive structure.

### [MEANS FOR SOLVING THE PROBLEM]

In order to solve the problem and achieve the object of the present invention, the solar collector and the cooperative solar collector system are configured as follows.

Namely, according to the present invention, there is provided a solar collector including a tracking unit that is rotatably arranged around a rotary shaft. The tracking unit includes a heat collection unit that is disposed in a longitudinal direction of the tracking unit and converts sunlight into heat by absorbing the sunlight, and a light collection unit that has a concave cross section in a lateral direction of the tracking unit and includes a mirror unit for reflecting the sunlight on the heat collection unit and a support member supporting the mirror unit from a back side of the mirror unit. The heat collection unit is fixed to the light collection unit. The support member includes a tubular first member disposed at a lowermost portion and in a longitudinal direction of the support member and a plurality of second members each having a boomerang shape. The second members are fixed to an upper portion of the first member in the lateral direction of the tracking unit and also vertically fixed to a backside of the tracking unit along a concave portion of the mirror unit.

According to the present invention, there is provided a cooperative solar collector system that includes two solar collectors which are arranged in the longitudinal direction of the solar collector, and a common driving mechanism that is arranged at a center portion between the two solar collectors and rotates the tracking units of the two solar collectors so as to focus sunlight on the heat collection unit.
Other aspects of the present invention will be explained in the embodiments embodying the present invention.

### [EFFECTS OF THE PRESENT INVENTION]

According to a solar collector and a cooperative solar collector system of the present invention, stable heat collection efficiency can be secured and a safe and less expensive support/drive structure can be achieved.

### [BRIEF DESCRIPTION OF THE DRAWINGS]

FIG. 1 is an illustration showing a structure of a solar collector according to a first embodiment of the present invention;
FIG. 2 is an illustration showing a rotation gravity center position and a drive shaft of a tracking unit according to the first embodiment;
FIG. 3 is a graph showing an example of a relationship between an optical axis shift angle of sunlight and heat collection efficiency according to the first embodiment;
FIG. 4A and FIG. 4B are graphs showing a relationship among a relative position of a drive shaft against a rotation gravity center position, an optical axis shift angle on a slave shaft side and heat collection efficiency;
FIG. 5A and FIG. 5B are graphs showing a relationship among a rotation angle θ of a tracking unit, an optical axis shift angle on a slave shaft side and heat collection efficiency;
FIG. 6 is a perspective view of a structure of a driving device according to the first embodiment;
FIG. 7A to FIG. 7C are perspective views of a reflection panel support structure according to the first embodiment;
FIG. 8 is a plan view of a cooperative solar collector system according to a second embodiment; and
FIG. 9 is an illustration showing a structure of a driving force transfer mechanism according to the second embodiment.

### [DETAILED DESCRIPTION FOR EMBODYING THE PRESENT INVENTION]

Hereinafter, embodiments for embodying the present invention will be explained in detail in reference to drawings.

### (First Embodiment)

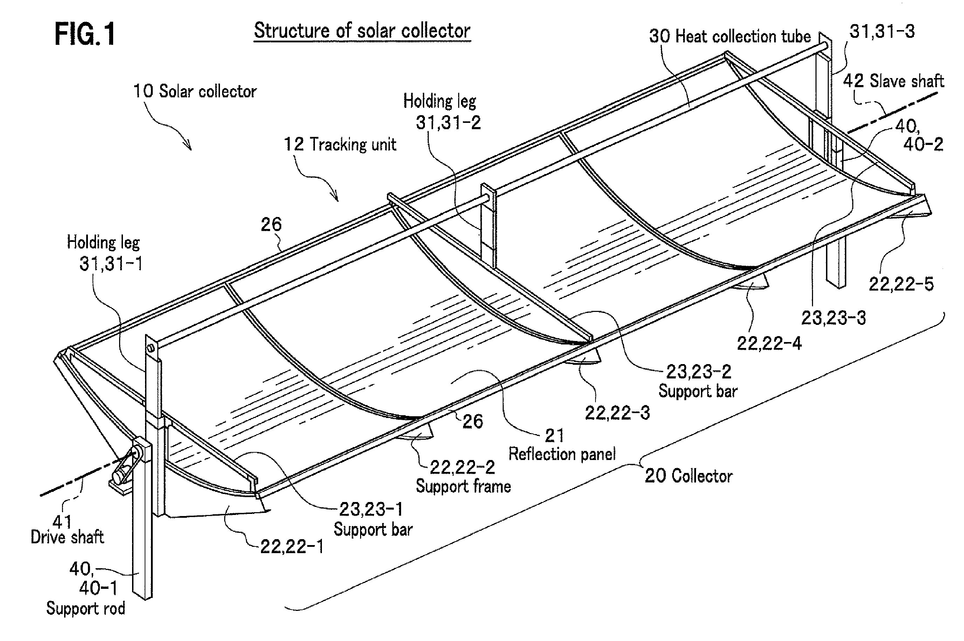

FIG. 1 is an illustration showing a structure of a solar collector according to the first embodiment of the present invention.
A solar collector 10 includes two support rods 40 (40-1, 40-2) disposed at each end of the solar collector 10 in the longitudinal direction and a tracking unit 12 that is rotatably supported by a drive shaft 41 that is a rotary shaft disposed in the support rod 40-1 and a slave shaft 42 that is a rotary shaft disposed in the support rod 40-2.

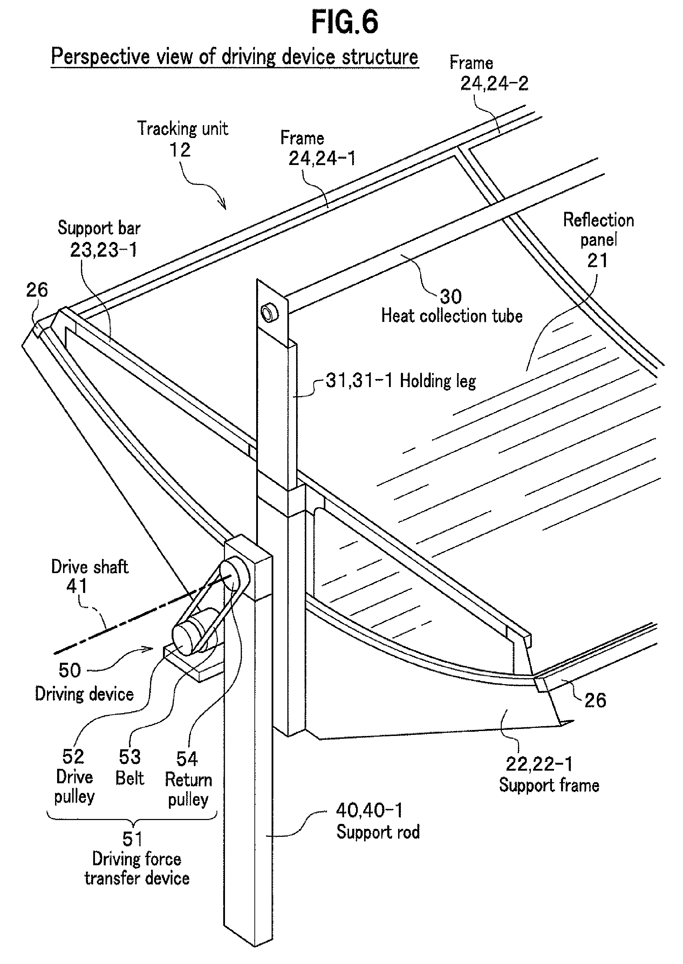

The tracking unit 12 rotates so that the solar collector 10 rightly faces the sun by a driving device 50 (see FIG. 6) and a driving force transfer device 51 (see FIG. 6), the both will be described later, that is, so as to focus sunlight on a heat collection tube 30 of a heat collection unit. The tracking unit 12 includes a collector 20 of a light collection unit, the heat collection tube 30 of a tubular heat collection unit and a plurality of holding legs 31 (31-1, 31-2, 31-3). A condition that the tracking unit 12 rightly faces the sun means that the sunlight is reflected by a reflection panel 21 disposed in the tracking unit 12 and focused on the heat collection tube 30.

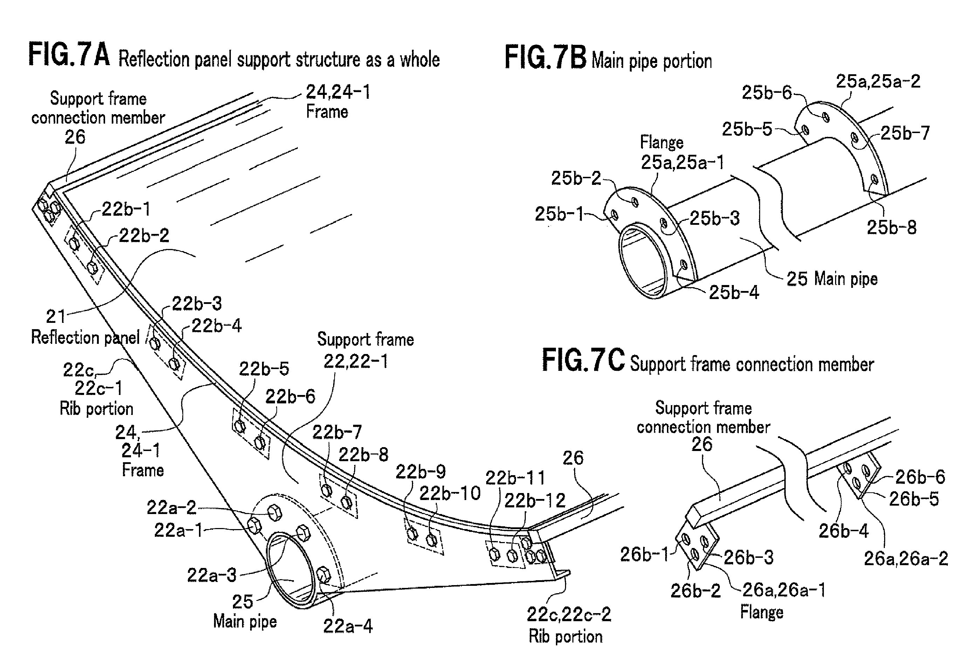

The collector 20 includes four reflection panels 21 that are mirror units and a support member supporting the four reflection panels 21. The support member includes five support frames 22 (22-1, 22-2, 22-3, 22-4, 22-5) of second members, a plurality of support bars 23 (23-1, 23-2, 23-3) that are arranged at each end and at the center of the solar collector 10 in the longitudinal direction, a frame 24 (see FIG. 7A to FIG. 7C) described later, a main pipe 25 (see FIG. 7A to FIG. 7C) of a first member and two support frame connection members 26 supporting these frames 24 (see FIG. 7A to FIG. 7C) in the longitudinal direction. These support frame connection members 26 are two third members fixing each end of the support frame 22 in the lateral direction, respectively. The reflection panel 21 has a concave cross section in the lateral direction and focuses sunlight on the heat collection tube 30 of the heat collection unit. The concave cross section has a light focusing curvature, and for example, it is a paraboloidal surface.

The collector 20 is further provided with a plurality of holding legs 31 (31-1, 31-2, 31-3) in the center portion of the collector 20 in the longitudinal direction, and the heat collection tube 30 is held in the upper center portion of the reflection panel 21 in the longitudinal direction by the plurality of holding legs 31. The heat collection tube 30 is a heat collection unit that converts sunlight into heat by absorbing the sunlight, and contains a heat medium, for example, water inside the heat collection tube 30. The heat collection tube 30 is connected to a heat medium outward path and a heat medium return path, not shown, and connected to a power generation system or an air-conditioning system through the heat medium outward path and the heat medium return path.

Water, that is the heat medium, is heated up by sunlight within the heat collection tube 30 to become hot water or water vapor, and introduced into a power generation system or air-conditioning system to be used as a heat source. When the hot water or the water vapor is used as a heat source, the hot water or the water vapor return to water again by being cooled, and return to the heat collection tube 30 through the heat medium return path, not shown.

In the solar collector 10, the tracking unit 12 is rotated so as to focus sunlight on the heat collection tube 30 by a driving device 50 (see FIG. 6) and a driving force transfer device 51 (see FIG. 6), which will be described later. The sunlight is focused on the heat collection tube 30 of the heat collection unit, by being reflected by the reflection panel 21 of the collector 20 of the light collection unit, and converted into heat quantity of the heat medium within the heat collection tube 30.

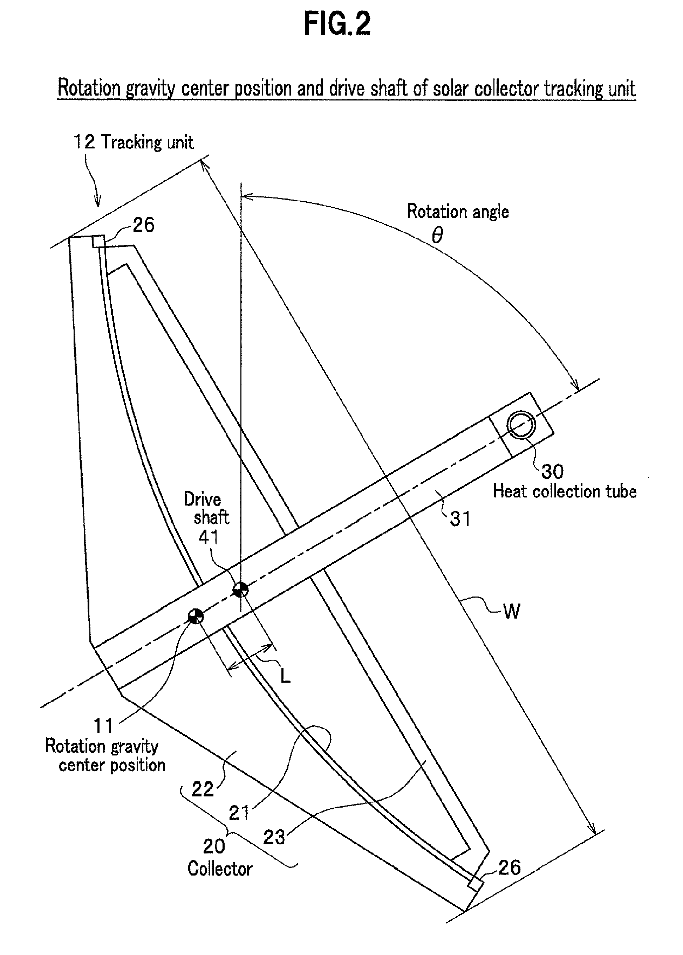

FIG. 2 is an illustration showing a rotation gravity center position and a drive shaft of a tracking unit according to the first embodiment. The tracking unit 12 has the collector 20, the plurality of holding legs 31 (31-1, 31-2, 31-3) and the heat collection tube 30, and rotates around the drive shaft 41 at rotation angle θ against the vertical line in accordance with tracking of the sun. The collector 20 includes the reflection panel 21 of the mirror unit, the support frame 22 of the support member supporting the reflection panel 21, the frame 24 (see FIG. 6), described later, surrounding four sides of the reflection panel 21, the support bar 23 stiffening the frame 24 (see FIG. 6) and two support frame connection member 26 that fix support frames 22 to each other in the rotary shaft direction.

The rotation gravity center position 11 is a gravity center position in a lateral cross section of the tracking unit 12. A distance between the drive shaft 41 of the rotary shaft and the rotation gravity center position 11 of the gravity center position in the lateral cross section of the tracking unit 12 is L, and a width of the collector 20 in the lateral direction is W. A relative position of the drive shaft 41 against the rotation gravity center position 11 is expressed by L/W. If the rotation gravity center position 11 is far from the drive shaft 41, when the whole collector 20 is rotated toward the sun, a twisting moment is generated around the drive shaft 41 or the slave shaft 42, and as a result, the reflection panel 21 on the side of the slave shaft 42 is deformed. An angle shift of the reflection panel 21 against the optical axis of sunlight on the side of the drive shaft 41 is small. However, on the side of the slave shaft 42, the angle shift becomes large. As the rotation angle θ increases, the angle shift on the side of the slave shaft 42 becomes significant and the light collection efficiency of the collector 20 as a whole decreases.

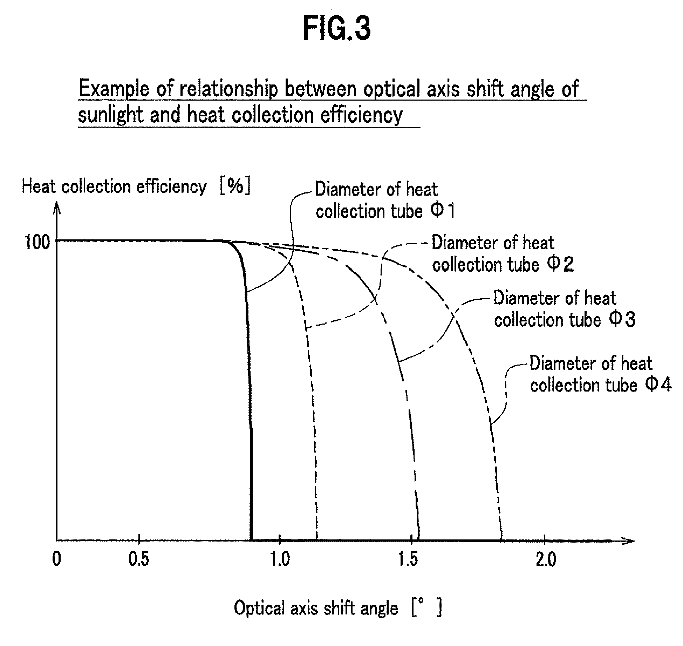

In the embodiment, the distance L between the drive shaft 41 of the rotary shaft and the rotation gravity center position 11 of the gravity center position in the lateral cross section of the tracking unit 12 is set to not more than 1/4 of the lateral width W of the collector 20. Therefore, as shown in FIG. 3, FIG. 4A, FIG. 4B, FIG. 5A and FIG. 5B, which will be described alter, a twisting moment of the whole collector 20 applied to the drive shaft 41 can be reduced to zero or a small value, as well as an amount of twist of the reflection panel 21 on the side of the slave shaft 42 is zero, or can be reduced. Then, an amount of shift against the optical axis of sunlight can be reduced, and a light focusing accuracy of sunlight by the light collection unit increases. As a result, the heat collection efficiency of the solar collector 10 can be stabilized, as well as the initial cost can be reduced by simplifying, for example, the support frame 22.
Furthermore, in the embodiment, by reducing a weight of the tracking unit 12, a torque of the driving device 50 (see FIG. 6) which drives the drive shaft 41 may be reduced.

FIG. 3 is a graph showing an example of a relationship between an optical axis shift angle of sunlight and heat collection efficiency according to the first embodiment. The vertical axis indicates the heat collection efficiency with %, and the horizontal axis indicates the optical axis shift angle with [° ]. In FIG. 3, the rotation gravity center position 11 and the drive shaft 41 are located at the same position, that is, FIG. 3 shows the case that there is no twisted angle on the side of the slave shaft 42.

The heat collection efficiency varies depending on diameters Φ1 to Φ4 of the heat collection tube 30. The diameter Φ1 is the narrowest, Φ2 is the second narrowest, Φ3 is the third narrowest and the diameter Φ4 is the largest. The heat collection efficiency starts to decrease at around 1° of the optical axis shift of the reflection panel 21 in any diameters Φ1 to Φ4 of the heat collection tube 30, and it is known from FIG. 3 that the heat collection fails if the optical axis shift exceeds 2°. An optical axis shift angle to start decrease in heat collection efficiency is an allowable twist angle calculated by light path design.

Even if optical axis shift angles of all reflection surfaces including the reflection panel 21 on the side of the drive shaft 41 are not more than 2°, if an optical axis shift is generated by a twisting moment of the reflection panel 21 on the side of the slave shaft 42, the heat collection efficiency may largely be decreased depending on the degree of optical axis shift. Therefore, it is required to design a structure and rigidity of, for example, support frame 22 appropriately so that the support member of the reflection panel 21 has a proper rigidity.

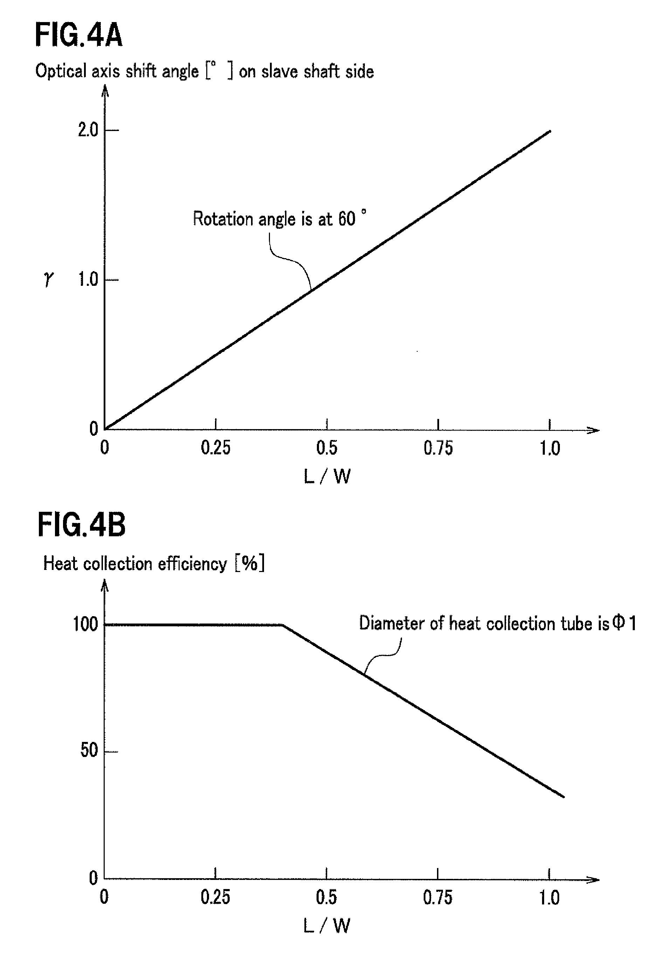

FIG. 4A and FIG. 4B are graphs showing a relationship among a relative position of a drive shaft against a rotation gravity center position, an optical axis shift angle on a slave shaft side and heat collection efficiency. The graphs show the relationship when a diameter of the heat collection tube 30 is Φ1 and the tracking unit 12 is rotated at 60° on the side of the drive shaft 41.
The horizontal axes in FIG. 4A and FIG. 4B commonly indicate L/W that is a relative position of the drive shaft 41 against the rotation gravity center position 11. The vertical axis of FIG. 4A indicates an optical axis shift angle of the tracking unit 12 on the side of the slave shaft 42. Hereinafter, the optical axis shift angle of the tracking unit 12 on the side of the slave shaft 42 is referred to as an optical axis shift angle γ*.* The optical axis shift angle γ increases linearly as L/W increases and reaches 2.0° when L/W is equal to 1.0 (L/W=1.0).

The vertical axis of FIG. 4B indicates heat collection efficiency of the solar collector 10 as a whole. When the optical axis shift angle γ exceeds around 0.9°, the heat collection efficiency starts to decrease, because a given part of the solar collector 10 on the side of the slave shaft 42 does not focus sunlight on the heat collection tube 30. As the optical axis shift angle γ increases, a part that does not focus the sunlight on the heat collection tube 30 increases, and when the optical axis shift angle γ of the tracking unit 12 on the side of the slave shaft 42 reaches at about 1.8°, a half of the solar collector 10 on the side of the slave shaft 42 becomes not to focus sunlight on the heat collection tube 30, and the heat collection efficiency decreases to 50%.

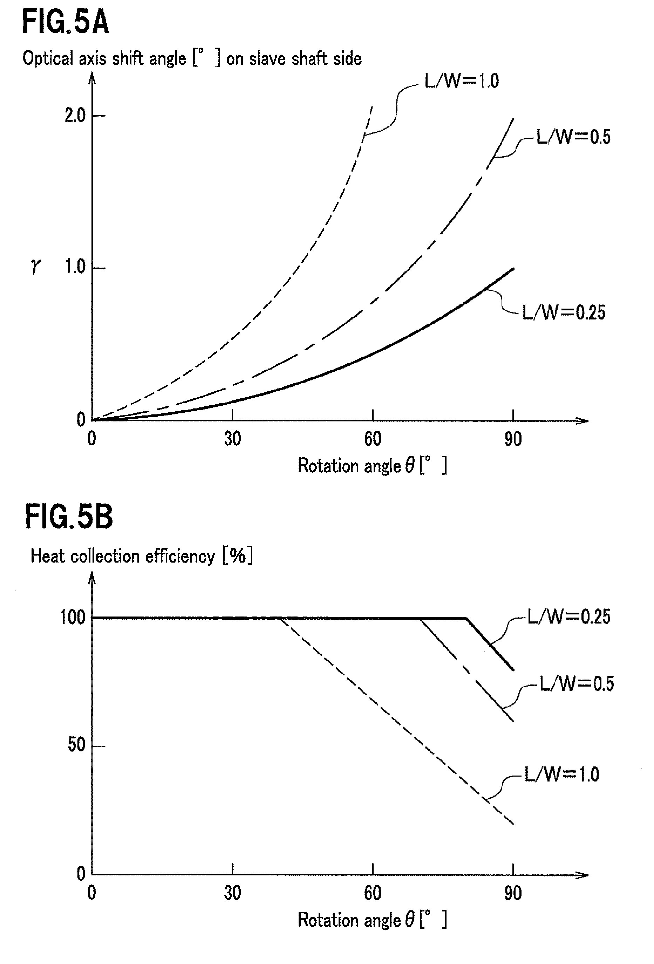

FIG. 5A and FIG. 5B are graphs showing a relationship among a rotation angle θ of a tracking unit, an optical axis shift angle on a slave shaft side and heat collection efficiency. The graphs show the relationship when a diameter of the heat collection tube 30 is Φ1 and L/W is 0.26, 0.5 and 1.0.

The horizontal axes of FIG. 5A and FIG. 5B commonly indicate the rotation angle θ of the tracking unit 12. The vertical axis of FIG. 5A indicates the optical axis shift angle γ. FIG. 5A and FIG. 5B show an example of effects of the rotation angle θ on the heat collection efficiency and the optical axis shift angle γ. The optical axis shift angle γ increases as the rotation angle θ increases. The optical axis shift angle γ increases as L/W increases, that is, the optical axis shift angle γ becomes larger as a value of L/W becomes larger. If L/W is equal to 1.0 (L/W=1.0), the optical axis shift angle γ reaches 2.0° when the rotation angle θ is 60°. On the other hand, if L/W is equal to 0.5 (L/W=0.5) , the optical axis shift angle γ reaches 2.0° when the rotation angle θ is 90°, and if L/W is equal to 0.25 (L/W=0.25), the optical axis shift angle γ reaches 1.0° when the rotation angle θ is 90°.

The vertical axis of FIG. 5B indicates heat collection efficiency of the solar collector 10 as a whole. If L/W is equal to 1.0 (L/W=1.0), the optical axis shift angle γ exceeds 0.9° when the rotation angle θ is about 45°, and the heat collection efficiency starts to decrease. Furthermore, when the rotation angle θ is 90°, the heat collection efficiency decreases to around 20%.
If L/W is equal to 0.5 (L/W=0.5), the optical axis shift angle γ exceeds 0.9° when the rotation angle θ is about 75°, and the heat collection efficiency starts to decrease. Furthermore, when the rotation angle θ is 90°, the heat collection efficiency decreases to around 60%.

If L/W is equal to 0.25 (L/W=0.5), the optical axis shift angle γ exceeds 0.9° when the rotation angle θ is about 80°, and the heat collection efficiency starts to decrease. This means that the heat collection efficiency does not decrease if the rotation angle θ is within a range of ± 80°. In a general installation density of the solar collector 10, if the rotation angle θ exceeds 80°, collectors 20 of the neighboring solar collectors block a sunlight L to each other, and a heat collection operation becomes difficult. Therefore, even if the heat collection efficiency decreases only when the rotation angle θ exceeds 80° by the optical axis shift angle γ, there is no practical matter. In the embodiment, since L/W is set to not more than 0.25 and the rotation angle θ is set within a range of ± 60°, a lowering of the heat collection efficiency is not caused.

In the embodiment, L/W is set to not more than 0.25 (0.25≧L/W), that is, a distance between the drive shaft 41 of the rotary shaft and the rotation gravity center position 11 in the lateral cross section of the tracking unit 12 is set to not more than 1/4 of a width of the collector 20 in the lateral direction. Therefore, a twisting moment of the whole collector 20 to be applied to the drive shaft 41 can be reduced to zero, or a small value. Furthermore, a twisting of the reflection panel 21 on the side of the slave shaft 42 can be avoided, or can be reduced to a small value. As a result, a shift amount against the optical axis of sunlight can be reduced and the heat collection efficiency can be stabilized, as well as an initial cost of the solar collector 10 can be reduced by simplifying the support member.

FIG. 6 is a perspective view of a structure of a driving device according to the first embodiment.
The tracking unit 12 includes the heat collection tube 30, the holding leg 31 holding the heat collection tube 30, the reflection panel 21 for focusing light on the heat collection tube, the frame 24 (24-1, 24-2, ...) surrounding the reflection panel 21 for stiffening the reflection panel 21, the support frame 22 of the support member supporting the reflection panel 21 through the frame 24, a support bar 23 for stiffening the frame 24, and two support frame connection members 26 that fix the support frames 22 with each other in the rotary shaft direction. These support frame connection members 26 are two third members that fix each end of the support frame 22 in the lateral direction. In addition, the tracking unit 12 is rotatably set up in the support rod 40-1 around the drive shaft 41.

The support rod 40-1 is provided with a driving device 50 and a driving force transfer device 51 that transfers a driving force of the driving device 50 to the tracking unit 12. The driving force transfer device 51 includes a drive pulley 52 driven by the driving device 50, a belt 53 that transfers a driving force of the drive pulley 52 and a return pulley 54 that rotates in conjunction with the belt 53. The tracking unit 12 rotates in conjunction with the return pulley 54.

The drive pulley 52 is rotatably disposed in the driving device 50, and the belt 53 is fit between the drive pulley 52 and the return pulley 54. When the driving device 50 rotates the drive pulley 52, the return pulley 54 rotates in conjunction with the drive pulley 52 through the belt 53, and the tracking unit 12 of the solar collector 10 rotates in conjunction with the rotation of the return pulley 54.

A mechanism to rotate the drive shaft 41 so as to focus sunlight on the heat collection tube 30 is connected only to a shaft of the support rod 40-1 which is one of the support rods 40 supporting the reflection panel 21, that is, the driving device 50 is set up at only one place instead of two places of the support rods 40-1, 40-2. As a result, the initial cost of the solar collector 10 can be reduced.

Even if a displacement more than a designed value is generated between the rotation gravity center position 11 and the drive shaft 41 by dimensional errors of components such as the heat collection tube 30 and the reflection panel 21, the heat collection efficiency of the solar collector 10 can be always secured, by forming a cross section of the support member so as to have such a strength that a twisting displacement on the side of the slave shaft 42 is not more than the allowable twist angle calculated from the light path design.

FIG. 7A to FIG. 7C are perspective views of a reflection panel support structure according to the first embodiment. FIG. 7A shows the reflection panel support structure as a whole, FIG. 7B shows a structure of a main pipe 25, and FIG. 7C shows a structure of the support frame connection member 26.

As shown in FIG. 7A, a plurality of thin flat support frames 22 that are the second member have a boomerang shape as a whole, and have a v-shaped side on the bottom side extending toward each end from the center portion of the support frame 22. The v-shaped side has a rib portion 22c (22c-1, 22c-2) that is a thick portion bended vertically and linearly with a predetermined width. A rigidity of the support member can be obtained by the rib portion 22c (22c-1, 22c-2) disposed on the v-shaped side, without increasing a weight of the support frame 22 much. Since the weight of the support frame 22 is not increased much, the twisting displacement on the side of the slave shaft 42 can be suppressed, and as a result, the reflection panel 21 can be easily designed so that the reflection panel 21 has such a strength that the twisting displacement is not more than the allowable twist angle calculated from the light path design. In addition, since the rib portion 22c (22c-1, 22c-2) is formed by bending the thin flat support frame 22 linearly, the rib portion 22c (22c-1, 22c-2) can be easily formed by bending work.

Upper sides of a plurality of support frames 22 that are the second member are cut off in a light focusing curvature, and the plurality of support frames 22 support the reflection panel 21 from the backside through the upper sides and a plurality of frames 24. The frame 24 is a member surrounding four sides of the reflection panel 21 in order to stiffen the reflection panel 21, and consists of, for example, metal such as aluminum and an elastic body such as rubber for fixing the reflection panel 21. The light focusing curvature is, for example, a shape of a parabolic concave mirror that focuses light on the heat collection tube 30 of the heat collection unit when sunlight is radiated from a given direction.

The plurality of support frames 22 of the second member are fixed to each other in the rotary shaft direction by the support frame connection member 26, and also fixed to the upper portion of the main pipe 25 of the first member in the lateral direction, which is set up at the bottom of the support frames 22. In addition, the plurality of support frames 22 are vertically fixed to the backside of the reflection panel 21 along the concave portion of the reflection panel 21 of the mirror unit. The main pipe 25 is the first member constituting the support member supporting the reflection panel 21 from the backside, is disposed at the lowermost part of the support member in the longitudinal direction, and has a tubular shape.

The reflection panel 21 is supported by the single main pipe 25 having a predetermined rigidity and a plurality of support frames 22 fixed to the main pipe 25. As a result, weights of the collector 20 and the tracking unit 12 can be reduced and the collector 20 may have a strength so that the twist angle of the reflection panel 21 is smaller than the allowable twist angle.

As shown in FIG. 7B, a flange 25a (25a-1, **...**) is disposed in the main pipe 25 at regular intervals in the longitudinal direction, and four screw holes 25b of a connection portion are disposed in each flange 25a. As shown in FIG. 7A, the collector 20 can be easily assembled by fastening the screw hole 25b (25b-1, ...) and a screw hole, not shown, disposed in the support frame 22, by using a bolt 22a (22a-1, 22a-2, 22a-3,22a-4) of a fastening member and a nut, not shown.

As shown in FIG. 7C, a flange 26a (26a-1, ...) is disposed in the support frame connection member 26 at regular intervals in the longitudinal direction as with the main pipe 25, and three screw holes 26b (26b-1 to 26b-3, 26b-4 to, ...) of a fastening portion is disposed in the flange 26a. As shown in FIG. 7A, the collector 20 can be easily assembled by fastening the screw hole 26b and a screw hole, not shown, disposed in the support frame 22, by using a bolt of the fastening member and a nut, not shown.

In addition, the support frame 22 and frame 24 are fastened and fixed by a plurality of bolts 22b (22b-1 to 22b-12) and nuts, not shown. The four sides of the reflection panel 21 are stiffened by the frame 24, and the frame 24 is fastened and fixed to each support frame 22. After that, two support frame connection members 26 are fastened to each end of the support frame 22 in the lateral direction to form the collector 20. Because of the foregoing structure of the collector 20, when the solar collector 10 is transported, the main pipe 25, the plurality of support frames 22 and the reflection panel 21 whose four sides are stiffened by the plurality frames 24 can be transported by breaking them down into components. Therefore, the transportation becomes easy.

In the embodiment, the main pipe 25 of the first member, the plurality of support frames 22 of the second member that are thin plate and have a boomerang shape, and the support frame connection member 26 of the third member are made of SS steel (Steel Structure).

In the embodiment, a shape of the support member cross section is designed to have such a strength that a deformation amount of the reflection panel 21 to be generated by a wind load caused by the first wind velocity, which is the maximum wind velocity under a normal use, becomes lower than the allowable twist angle calculated by the light path design, when the reflection panel 21 is in operation for focusing sunlight at a predetermined maximum rotation angle θmax. Therefore, an optimum design that secures the heat collection efficiency can be performed even if the wind velocity is the maximum of the normal use, and increase in cost of the structure can be avoided.

In the embodiment, a structure of the reflection panel 21 is designed so that a stress value of the support member of the reflection panel 21 to be generated by a wind load caused by the second wind velocity, which is the maximum wind velocity under non-operation, becomes lower than the allowable stress value, under the condition that the rotation angle of the reflection panel 21 is at 0°, that is, under the condition that the reflection panel 21 is not operated. Therefore, the reflection panel 21 can be prevented from breaking, for example, when a typhoon attacks the reflection panel 21.

In the embodiment, the support frame 22 is formed in a structure that has a boomerang shape as a whole, and has a v-shaped side on the bottom side extending toward each end from the center portion. Therefore, the support frame 22 does not shade the reflection panel 21, in comparison with a semilunar support frame as a first comparison example, and thereby, does not decrease the heat collection efficiency. In addition, the support frame 22 has a smaller downward protrusion in comparison with a crescentic support frame as a second comparison example, and thereby, is available to decrease a load to be caused by wind. Accordingly, it becomes possible to reduce an initial cost of the members by reducing weight of the structure, to reduce a transportation cost of the solar collector 10, and in addition, to drive the tracking unit 12 by the driving device 50 having a small torque.

### (Effects of the First Embodiment)

The foregoing first embodiment has the following advantages (A) to (H).
(A) The drive shaft 41 of the reflection panel 21 is disposed at a position identical to or close to the rotation gravity center position 11 of the tracking unit 12 which has the collector 20 and the heat collection tube 30. Namely, a distance between the drive shaft 41 of the rotary shaft and the rotation gravity center position 11 in the lateral cross section of the tracking unit 12 is set to not more than 1/4 of a lateral width of the collector 20. Therefore, a twisting moment of the whole collector 20 to be applied to the drive shaft 41 can be reduced to zero, or a small value, as well as a twist amount of the reflection panel 21 on the side of the slave shaft 42 can be made zero, or reduced. As a result, a shift amount against the optical axis of sunlight can be reduced and the heat collection efficiency of the solar collector 10 can be stabilized. In addition, the initial cost of the solar collector 10 can be reduced by simplifying the support frame.

(B) The driving device 50 that is a driving mechanism for rotating a rotary shaft of the tracking unit 12 so as to focus sunlight on the heat collection tube 30 is set up on only one side of the rotary shaft of the reflection panel 20 in the longitudinal direction. As a result, the initial cost of the solar collector 10 can be reduced by setting up the driving device 50 on only one end instead of both ends.

(C) A shape of the support member is designed to have such a strength that a twisting displacement on the side of the slave shaft 42, which is generated by one-side driving on the side of the drive shaft 41, is not more than the allowable twist angle calculated from the light path design, even if there is a displacement more than a designed value between the rotation gravity center position 11 and the drive shaft 41 by specification errors of the heat collection tube 30 and the reflection panel 21. As a result, the heat collection efficiency can be secured, and the initial cost of the support member can be reduced.

(D) The support member consists of the frame 24 that fixes the reflection panel 21 in a light focusing curvature, the support frame 22 that is formed by a thin plate for holding the frame 24 and whose bottom side is provided with the rib portion 22c formed in a V-shape, the support frame connection member 26 that fixes the support frame 22 in the rotary shaft direction, and the tubular main pipe 25 disposed at the bottom of the support frame 22. According to this structure, it becomes easy to design the reflection panel 21 having such a strength that a twist angle of the reflection panel 21 is not more than the allowed twist angle calculated from the light path design, without increasing a weight of the collector 20 much. Since the weight of the support frame 22 is not increased much, a twisting displacement on the side of the slave shaft 42 is suppressed, and thereby, the reflection panel 21 can be easily designed to have such a strength that the twist angle becomes smaller than the allowable twist angle calculated by the light path design. In addition, there is the advantage that the rib portion 22c can be easily formed by bending work.

(E) The collector 20 has a structure to fasten each unit by fastening members. According to this structure, when the solar collector 10 is transported, the main pipe 25, the plurality of support frames 22 and the reflection panel 21 whose four sides are stiffened by the plurality frames 24, can be transported by breaking them down into components. As a result, the transportation becomes easy.

(F) A shape of the support member cross section is designed to have a strength so that a deformation amount of the reflection panel 21 to be generated by a wind load caused by the first wind velocity, which is the maximum wind velocity under a normal use, becomes lower than the allowable twist angle calculated by the light path design, when the reflection panel 21 is in operation for focusing sunlight at a predetermined maximum rotation angle θmax. Therefore, an optimum design that secures the heat collection efficiency can be performed even if the wind velocity is the maximum in the normal use, and increase in cost of the structure can be avoided.

(G) A structure of the reflection panel 21 is designed so that a stress value of the support member of the reflection panel 21 to be generated by a wind load caused by the second wind velocity, which is the maximum wind velocity under non-operation, becomes lower than the allowable stress value, under the condition that the rotation angle of the reflection panel 21 is at 0°, that is, under the condition that the reflection panel 21 is not operated. As a result, the reflection panel 21 can be prevented from breaking when, for example, a typhoon attacks the reflection panel 21.

(H) In the embodiment, the support frame 22 is a structure that has a boomerang shape as a whole and a v-shaped side on the bottom side extending toward each end portion from the center portion. Therefore, the support frame 22 does not shade the reflection panel 21 in comparison with a semilunar support frame of a first comparison example, and thereby, does not decrease the heat collection efficiency. In addition, the support frame 22 is available to decrease a load caused by wind in comparison with a crescentic support frame of a second comparison example. Accordingly, it becomes possible to reduce the initial cost of the members by reducing weight of the structure, to reduce a transportation cost of the solar collector 10, and in addition, to drive the tracking unit 12 by the driving device 50 having a small torque.

### (Second Embodiment)

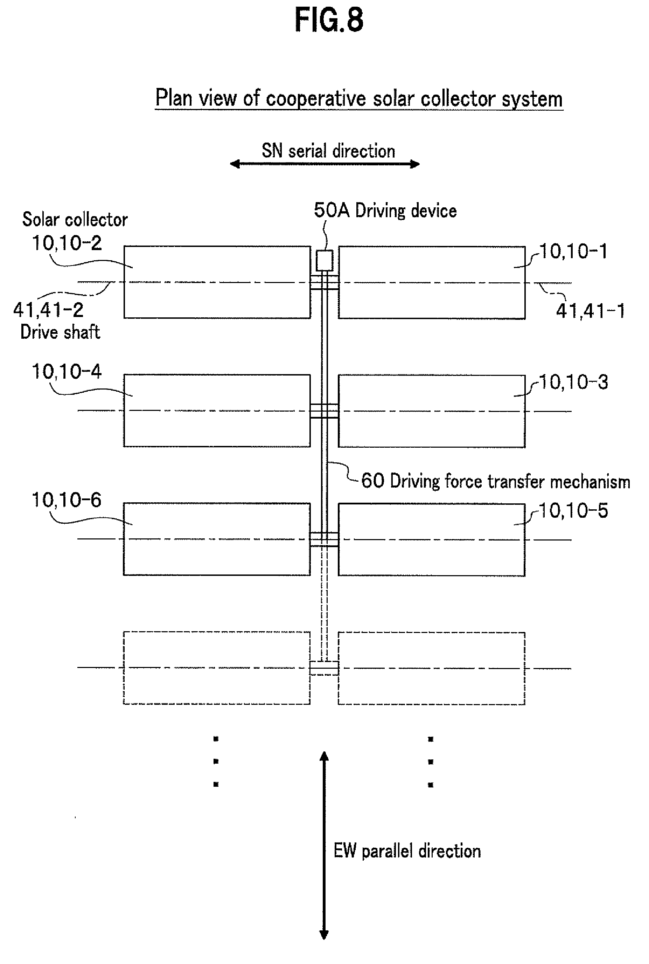

FIG. 8 is a plan view of a cooperative solar collector system according to the second embodiment.
In the cooperative solar collector system according to the second embodiment, two solar collectors 10-1, 10-2, which are solar collectors according to the first embodiment, are arranged in a serial direction SN (see FIG. 8), that is the longitudinal direction of the two solar collectors 10-1, 10-2, and each drive shaft 41 of the two solar collectors 10-1, 10-2 is adjusted to be on the same line and connected to each other. A driving device 50A of a common driving mechanism is arranged in the center portion between the two solar collectors 10-1, 10-2. The two solar collectors 10-1, 10-2 are commonly driven by the driving device 50A. As a result, driving mechanisms for the two solar collectors 10-1, 10-2 can be consolidated into one, thereby resulting in cost reduction of the system cost.

In addition, the solar collectors 10 of the second solar collector system composed of a pair of solar collectors 10 arranged in the serial direction SN(see FIG. 8), are arranged in the parallel direction EW (see FIG. 8), that is the lateral direction of the solar collectors 10-1, 10-2 forming the first solar collector system, and the drive shaft 41 of each of the solar collectors 10 is adjusted to be on the same line and connected to each other. In the cooperative solar collector system shown in FIG. 8, the second solar collector system consisting of solar collectors 10-3, 10-4 and the third solar collector system consisting of solar collectors 10-5, 10-6 move in cooperation in parallel in the lateral direction of the solar collectors 10-1, 10-2 that form the first solar collector system.

All solar collectors (10-1, 10-2, 10-3, ...) are commonly and rotatably driven by the driving device 50A driving the solar collectors 10-1, 10-2 through a driving force transfer mechanism 60. Therefore, driving mechanisms for not less than three solar collectors 10 can be consolidated into one, thereby resulting in reduction of the system cost.

The number of solar collectors moving in cooperation is determined so that the driving force transfer mechanism 60 can drive the solar collector 10 accurately in order that the twist angle of each solar collector 10 may be not more than the allowable twist angle, and as a result, the heat collection efficiency of a whole cooperative solar collector system can be secured.

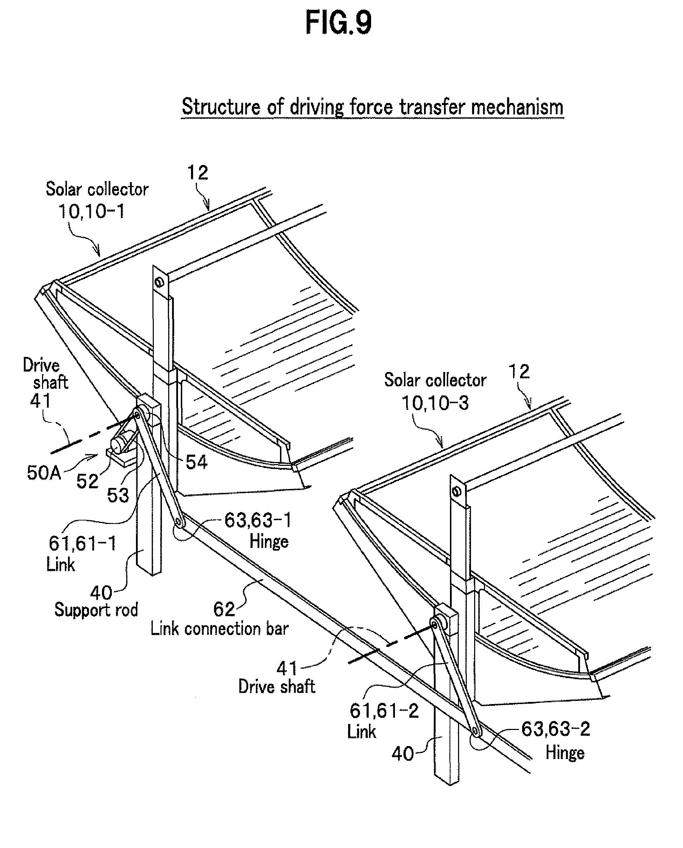

FIG. 9 is an illustration showing a structure of at driving force transfer mechanism according to the second embodiment.
A plurality of solar collectors 10-1, 10-3 include tracking units 12 which are rotatably supported by the respective support rods 40 around the respective drive shafts 41. Only the solar collector 10-1 is provided with the driving device 50A fixed in the support rod 40, the drive pulley 52 driven by the driving device 50A, the belt 53 that transfers the driving force of the drive pulley 52 and the return pulley 54 that rotates in conjunction with the belt 53.

The driving force transfer mechanism 60 includes a bar link 61 (61-1, 61-2, ...) which moves in conjunction with the return pulley 54 of each solar collector 10, a link connection bar 62 that is a bar connection portion connected to each link 61 and a hinge 63 (63-1, 63-2, ...) that connects the link connection bar 62 and the link 61 (61-1, 61-2, ...).

When the driving device 50A rotates the drive pulley 52, the return pulley 54 rotates in conjunction with the drive pulley 52 through the belt 53, and the tracking unit 12 of the solar collector 10-1 rotates together with the return pulley 54. In addition, the rink 61-1 rotates in conjunction with the rotation of the return pulley 54, and the driving force is transferred to another link 61-2 through the link connection bar 62. The link 61-2 rotates the tracking unit 12 of the solar collector 10-3.

### (Effects of the Second Embodiment)

The foregoing second embodiment has the following advantages (I) and (J).
(I) In the cooperative solar collector system according to the second embodiment, two solar collectors 10-1, 10-2, each of which is the solar collector according to the first embodiment, are arranged in the serial direction SN (see FIG. 8) of the longitudinal direction, and the driving device 50A of common driving mechanism is set in the center portion of the two solar collectors 10-1, 10-2. The two solar collectors 10-1, 10-2 are commonly rotatably driven by the driving device 50A. Therefore, the driving mechanisms for the two solar collectors 10-1, 10-2 can be consolidated into one, thereby resulting in reduction of the system cost.

(J) In addition, a plurality of systems, each of which arranges a pair of solar collectors 10 in the serial direction, are arranged in the parallel direction EW of the lateral direction of the solar collectors 10-1, 10-2, and further, all solar collectors 10 (10-1, 10-2, 10-3, ...) are commonly rotatably driven by the driving device 50A which drives the solar collectors 10-1, 10-2. Therefore, the driving mechanisms for three or more solar collectors 10 can be consolidated, thereby resulting in reduction of the system cost.

### (Modified Example)

The present invention is not limited to the foregoing embodiments, and can be embodied in various forms without departing from the spirits of the present invention. For example, there may be the following (a) to (e), as utilization forms and modified examples of the present invention.

(a) In the first embodiment, the main pipe 25 of the first member and a plurality of thin plate support frames 22 of the second member are made of SS steel (Steel Structure). However, the material is not limited to the SS steel, and a material having a predetermined rigidity may be used for the main pipe 25 of the first member and the plurality of thin plate support frames 22 of the second member.

(b) In the first embodiment, the main pipe 25 of the first member and a plurality of thin plate support frames 22 of the second member are fastened and fixed by bolts and nuts of fastening members. However, the fastening members are not limited to the bolts and nuts, and the main pipe 25 and the support frame 22 may be fixed by welding. When materials of the main pipe 25 and the support frame 22 are different, for example, aluminum and iron, friction stir welding may be used for fixing them. Furthermore, for example, a bonding by an adhesive agent or brazing may be used for the fixing.

(c) In the first embodiment, the light focusing curvature is a paraboloidal surface. However, the light focusing curvature is not limited to the paraboloidal surface, and another shape may also be used as long as the shape focuses light on the heat collection tube 30 of the heat collection unit when sunlight radiates from a given direction, and for example, an ellipsoidal surface may be used.

(d) In the second embodiment, the driving force transfer mechanism 60 shown in FIG. 8 may be a wire, and further, may be a belt fit on the return pulley 54 disposed in each solar collector 10.

(e) In the first embodiment, the V-shaped side formed on the bottom side of the second member has the rib portion 22c (22c-1, 22c-2) of a thick portion that is formed by being bended vertically and linearly with a predetermined width. However, the thick portion may be formed by fixing a rod member on the V-shaped side by, for example, welding, fastening, bonding, or brazing.

### [Description of Reference]

- 10: Solar collector
- 11: Rotation gravity center position
- 12: Tracking unit
- 20: Collector (Light collection unit)
- 21: Reflection panel (Mirror unit)
- 22: Support frame (Second member)
- 22c: Rib portion (Thick portion)
- 23: Support bar
- 24: Frame
- 25: Main pipe (First member)
- 25a: Flange
- 25b: Screw hole
- 26: Support frame connection member (Third member)
- 30: Heat collection tube (Heat collection unit)
- 31: Holding leg
- 31: (31 ̶ 1 ∼ 31 ̶ 3) Holding leg
- 40: Support rod
- 41: Drive shaft (Rotary shaft)
- 42: Slave shaft
- 50,: 50A Driving device
- 51: Driving force transfer device
- 52: Drive pulley
- 53: Belt
- 54: Return pulley
- 60: Driving force transfer mechanism
- 61: Link
- 62: Link connection bar
- θ: Rotation angle
- θmax: Maximum rotation angle

## Claims

1. A solar collector (10) provided with a tracking unit (12) that is rotatably arranged around a rotary shaft(41), the tracking unit (12) comprising: a heat collection unit (30) that is disposed in a longitudinal direction of the tracking unit (12) and converts sunlight into heat by absorbing the sunlight; and a light collection unit (20) that has a concave cross section in a lateral direction of the tracking unit (12) and includes a mirror unit (21) for reflecting the sunlight on the heat collection unit (30) and a support member (22-26) supporting the mirror unit (21) from a backside of the mirror unit (21),
wherein the heat collection unit (30) is fixed to the light collection unit (20); and
wherein the support member (22-26) includes a tubular first member (25) disposed at a lowermost portion and in a longitudinal direction of the support member (22-26) and a plurality of second members (22) each having a boomerang shape,
wherein the second members (22) are fixed to an upper portion of the first member (25) in the lateral direction of the first member (25) and vertically fixed to a backside of the mirror unit (21) along a concave portion of the mirror unit (21).

2. The solar collector according to claim 1,
wherein the second member has a V-shaped side extending toward each end of the second member (20) from a center portion of the second member (22) on a lower side of the second member (22), and the V-shaped side is provided with a thick portion (22c).

3. The solar collector according to claim 2,
wherein the thick portion (22c) of the V-shaped side is formed by a rib portion bended with a predetermined width.

4. The solar collector according to claim 2,
wherein the thick portion (22c) of the V-shaped side is formed by a rod member fixed to the V-shaped side.

5. The solar collector according to any one of claims 1 to 4,
wherein an upper side of the second member (22) is cut off in a light focusing curvature of the mirror unit (21), and the mirror unit (21) is supported by the upper side.

6. The solar collector according to any one of claims 1 to 5,
wherein a distance between the rotary shaft (41) and a gravity center position (11) in a lateral cross section of the tracking unit (12) is not more than 1/4 of a width of the light collection unit (20) in a lateral direction.

7. The solar collector according to any one of claims 1 to 6,
wherein the first member (25) further includes a plurality of flanges (25a), and the plurality of second members (22) are fastened and fixed to the first member (25), respectively, by the plurality of flanges.

8. The solar collector according to any one of claims 1 to 6,
wherein the plurality of second members (22) are fixed to the first member (25) by welding.

9. The solar collector according to any one of claims 1 to 8,
wherein the support member (22-26) further includes two third members (26) that fixes respective ends of each of the plurality of second members (22) in the lateral direction of the tracking unit (12).

10. The solar collector according to any one of claims 1 to 9, wherein the heat collection unit (30) has a tubular shape.

11. The solar collector according to any one of claims 1 to 10, wherein a driving mechanism for rotating the tracking unit (12) so as to focus sunlight on the heat collection unit (30) is connected to the rotary shaft (41).

12. A cooperative solar collector system, comprising:
two solar collectors (10) according to any one of claims 1 to 10 which are arranged in a longitudinal direction of each of the two solar collectors (10); and
a common driving mechanism that is arranged at a center portion between the two solar collectors (10) and rotates tracking units (12) of the two solar collectors (10) so as to focus sunlight on respective heat collection units (10).

13. A cooperative solar collector system, comprising:
a plurality of second solar collector systems, each of which comprises two solar collectors (10) according to any one of claims 1 to 10 which are arranged in a longitudinal direction of each of the two solar collectors (10), that are arranged in a lateral direction of a first solar collector system that consists of the two solar collectors (10) according to claim 12; and
a driving force transfer mechanism (60) for transferring a rotation force of the common driving mechanism, which is provided in the cooperative solar collector system according to claim 12, to each of the second solar collector systems.

14. The cooperative solar collector system according to claim 13,
wherein the driving force transfer mechanism (60) comprises:
a plurality of bar links (61) disposed in each rotary shaft (41); and
a bar connection unit (62) that is rotatably connected to each of the plurality of bar links (61) through hinges.

15. The cooperative solar collector system according to claim 13,
wherein the driving force transfer mechanism (60) comprises a belt (53) fit on pulleys (52) which are connected to a plurality of the rotary shafts (41).
